# EUROPEAN PATENT SPECIFICATION

(11) **EP 3 347 259 B1**
(45) Date of publication and mention of the grant of the patent: **31.03.2021**
(21) Application number: 16794386.9
(22) Date of filing: 08.09.2016
(51) Int. Cl.: B62D 21/12, B62D 21/14, B62D 21/20

(54) **A TRAILER**
ANHÄNGER
REMORQUE

(30) Priority: 08.09.2015 GB 201515880
(43) Date of publication of application: 18.07.2018
(73) Proprietor: Douglas, Malcolm, Rogart, Sutherland IV28 3UB (GB)
(72) Inventor: Douglas, Malcolm, Rogart, Sutherland IV28 3UB (GB)
(74) Representative: Aldridge, Christopher Simon
(86) International application number: PCT/GB2016/052771
(87) International publication number: WO 2017/042562

(56) References cited:
- WO-A1-2006/037147
- WO-A1-2015/158944
- FR-A1- 2 735 733
- US-A1- 2009 026 736

## Description

### Field of the Invention

The invention relates to a trailer, particularly a modular trailer that can be readily assembled and disassembled and is easy to transport.

### Background to the Invention

Trailers are useful for transporting various items and goods; however, when they are not being used, they take up a considerable amount of space, which can make them difficult to store. Furthermore, trailers are generally of a set size and so different trailers must be used for different loads. As a result, one may require several trailers, all of which need storing when not in use.

FR2735733 (Bernard) discloses a carrier with two hinged arms at the rear to support a number plate and rear lights when the arms are in their unfolded position. The hinge is on the central axis of the carrier attached to a bar (4) that runs along the central axis and the hinged arms fold along the bar (4) for storage.

US2009026736 (Koch) discloses a sport trailer having a centre load supporting rail, wheels, and a stowable telescopic towing tongue. The towing tongue is removably received within an inner channel of the centre rail and telescopes to achieve different length configurations of the trailer.

WO2015158944 (Little Way Team) discloses a modular trailer with a foldable configuration. The trailer has a main frame module with a trailer coupler bar assembly set, two mountings having wheels having retractable wheels and a self-supporting frame (9) intended for being coupled with other complementary modules.

### Summary of the Invention

Accordingly, the present invention is directed to a modular trailer comprising:
a tubular central chassis spine constructed from at least one cross-shaped tubular section, wherein two of the limbs of the cross-shaped tubular section extend axially and the other two limbs extend transversely, each of the limbs being provided with connection sections at their ends;
a plurality of tubular sections connected to the connection sections of the transversely extending limbs of the at least one cross-shaped tubular structure, wherein at least two of the tubular sections are provided with wheels;
a tubular T-shaped end section connected to the connection section of one of the axially extending limbs of the central chassis spine; and
a towing connection connected to the connection section at the opposite end of the central chassis spine from that of the end T-shaped tubular section,
wherein the tubular sections are readily removable from the connection sections of the central chassis spine; and
wherein the length of the modular trailer spine is extendible by attaching further cross-shaped tubular sections to the connection sections of the axial limbs of the tubular central chassis spine.

The user of such a trailer allows for it to be stored easily and for its size to be increased by attaching further elements, thereby enabling a user to have a single trailer for transporting loads of varying size.

Preferably, the connection section of each element of the trailer comprises a flange with apertures therein and the elements of the trailer are connected by way of retaining bolts with locking nuts passing through the apertures of the respective flanges. More preferably, a spacer with a flange is arranged between the connection section and each element is connected thereto.

In one arrangement, the wheels are provided with hydraulic brakes and/or the wheels are provided with suspension. Providing brakes and suspension to the trailer protects the load and makes towing the trailer safer.

The width of the modular trailer may be extended by attaching further tubular sections to the tubular sections connected to the tubular central chassis spine. Allowing the width and the length to be controlled by attaching and removing tubular parts enables the size and strength of the trailer to be adapted. This allows a single central chassis spine to be employed in a plurality of different trailer arrangements, thereby making the trailer flexible.

The invention extends to a kit comprising:
a plurality of cross-shaped tubular sections
a plurality of tubular sections;
a tubular T-shaped end section;
a towing connection; and
a plurality of wheels,
wherein each of the cross-shaped tubular sections, tubular sections; T-shaped end section and towing connection is provided with at least one connection section.

By being in kit form the trailer is readily assembled and disassembled and can be stored with a smaller footprint than the assembled trailer.

Preferably, the connection sections comprise a flange with apertures therein. Each tubular part, or at least some of them, may comprise a flange at each end so as to enable it to be connected to an adjacent part by aligning the flanges and providing connecting means, most likely in the form of bolts, to join them.

### Brief Description of the Drawings

An embodiment of the invention will now be described, by way of example only, and with reference to the accompanying drawings, in which:
Figure 1 is a drawing showing an embodiment of the present invention;
Figure 2 is an enlarged view of a tow bar of the present invention;
Figure 3 is an enlarged view of part of the tow bar of Figure 2;
Figure 4 is an exploded view of the part of Figure 3;
Figure 5 is a an exploded view of the framework of the trailer of the Figure 1;
Figure 6 is a further view of the framework of Figure 5;
Figure 7 is a view of a suspension module for use with the trailer of Figure 1;
Figure 8 is a view of the suspension module of Figure 7 attached to the trailer of Figure 1;
Figure 9 is a further view of the suspension module of Figure 7
Figure 10 is a view of a cross-shaped tubular for use in the trailer of Figure 1;
Figure 11 is an end protector for use with the trailer of Figure 1;
Figure 12 is a light holder unit for use with the trailer of Figure 1;
Figure 13 is a view of the tubular structure of a trailer in accordance with the present invention;
Figure 14 is a view of the tubular structure of Figure 13 with underslung suspension connectors attached;
Figure 15 is a view of the components for enabling underslung suspension;
Figure 16 is a view of a further trailer in accordance with the present invention; and
Figure 17 shows a further embodiment of a trailer in accordance with the present invention.

### Detailed Description of Exemplary Embodiments

The Figures show a trailer 10 comprising a tubular central chassis spine 12 that is made up from three central cross-shaped sections 14 connected in longitudinally, along with extending tubes 16 connecting the cross-shaped sections 14 to T-shaped end sections 18 and 20, which form the respective ends of the trailer 10.

The trailer 10 is provided with transverse extension tubes 28 at the first T-shaped end section 18 to extend its width and the ends of those extension tubes 28 are provided with end tubes 30, which are in turn provided with end protectors 32 at their 'free' end.

The first T-shaped end section 18 forms the front end of the trailer 10 and is connected to a tow bar assembly 22. The second T-shaped end second 20 forms the rear end of the trailer 10 and is provided with a light units 24 at each end of the respective transverse ends for holding lights. A number-plate receiving section 26 for receiving and holding a number-plate is attached to the rear.

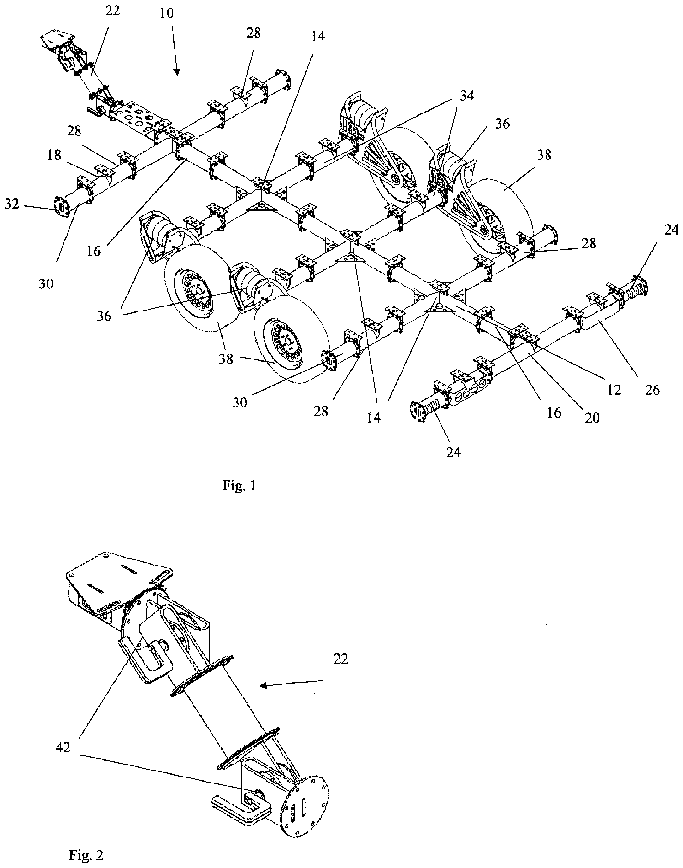

In the embodiment shown in Figure 1, there are five transverse tubular structures, those being the front end (including first T-shaped end section 18), a first wheel-connecting spar section (including the first of the three cross-shaped section 14), a second wheel-connecting spar (including the second of the three cross-shaped section 14), a support spar (including the third of the three cross-shaped section 14) and the rear T-shaped end section 20.

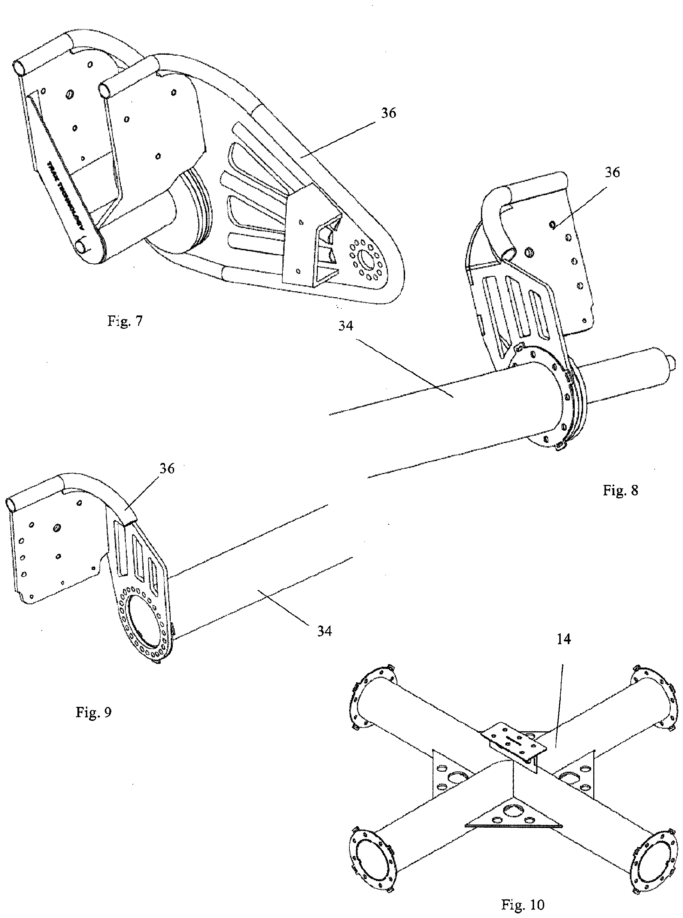

Each of the wheel-connecting spars 34 are provided with suspension modules 36 at their free ends, to which are connected wheels 38. The rotational orientation of the suspension modules 36 may be adjusted according to the requirements of the trailer 10, as shown in Figures 7 and 8.

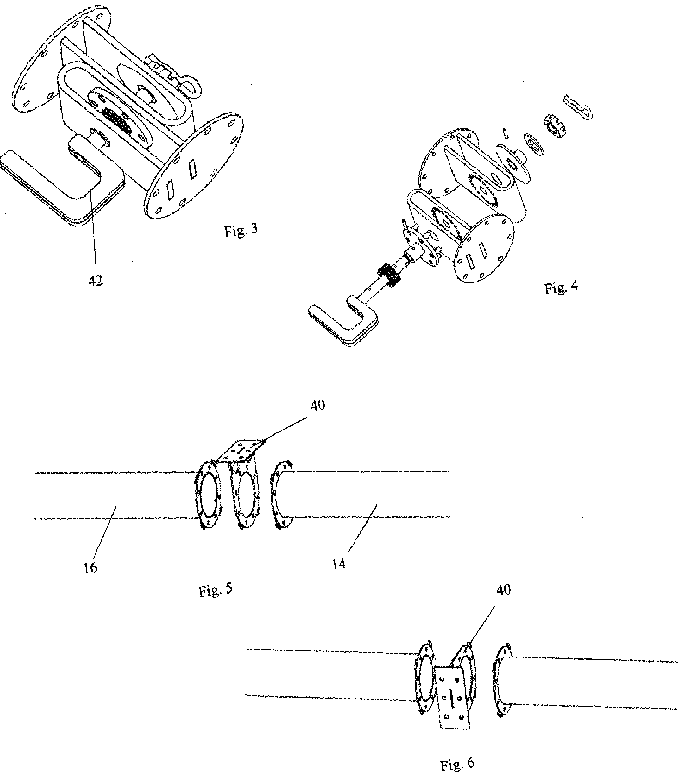

At each junction between two tubular parts, a top connector bracket 40 is supplied. The top connector bracket 40 may be used to connect a bed (not shown) to the chassis of the trailer 10. An exploded view of the connector 40 is shown in Figures 5 and 6, which also detail how it may be connected on an angle, if desired.

The tow bar assembly 22 may comprise an "A" draw-bar or an "I" draw-bar to connect the front end of the trailer 10. Additionally, the tow bar assembly 22 is provided with adjustment means 42 to change the angle and height of the tow bar connection. An exploded view of the adjustment mechanism is shown in Figure 4.

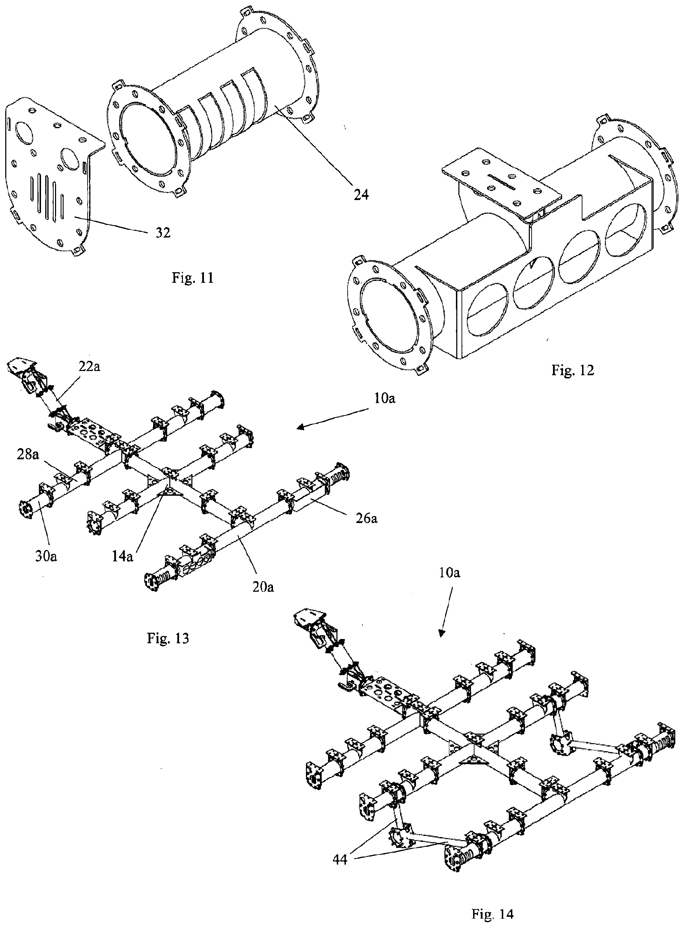

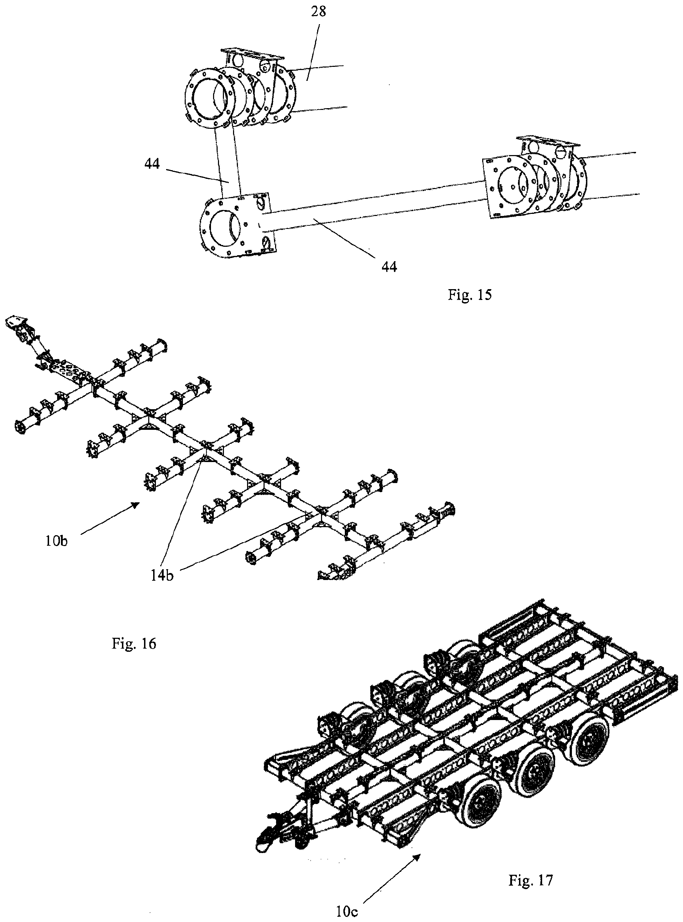

Figure 13 shows a further trailer 10a according to the present invention that comprises two end sections 18a and 20a with a support spar therebetween. In such an arrangement, an underslung suspension system may be desirable, thus, underslung suspension supports 44 are provided, each having one end connected to a transverse spar or end of the trailer and the other ends connecting to form a V-shape to which a suspension module may be connected, as shown in Figures 14 and 15.

Figure 16 shows an enlarged trailer 10b, which comprises further cross-shaped sections 14b.

Figure 17 shows a further embodiment 10c, wherein the connector brackets are connected to ribs 46 that provide structural rigidity and strength to the trailer 10c. The ribs may be single sections that run the length of the trailer 10c, or, more preferably, they are shorter, individual units that reach (and connect) the spars and end sections.

Features of different trailers described and shown herein may be employed in other trailers described and shown herein. For example, the underslung suspension shown in Figure 14 may be employed in the trailer of Figure 17. Likewise, different tow bar assemblies may be interchanged.

The tubular trailer system can be constructed using separate standard parts. These parts are able to be taken apart, re-positioned in many combinations so that the user has varying sizes of trailer height, length and width depending on the requirement use. Within the construction, plates separate each tubular component so that other parts maybe be fixed to the chassis by way of bolting or fixing devices. The number of axles and their relationship to the centre line of the chassis spine, or backbone, can be changed so that the axles maybe inline or offset to the longitudinal axis.

Along the longitudinal and diagonal axes of the trailer is the main load carrying torsional frame spine from where the following may be mounted in varying formats and arrangements: outriggers; axles; drawbars; mounting plates; and extension tubes.
The lateral axis can be extended by way of fixing standard tubular parts with the option to fix the wheel station either on the same axis or by way of parts below the axis of the lateral plane.

The trailer may be readily disassembled and carried/transported with no component weighing more than 20kg or being longer than 1000mm.

The coupling of the parts element may be undertaken by way of pre-drilled flanges that are the same dimension throughout. The flanges may be connected by way of retaining bolts with locking nuts. Between each assembly is a connector bracket, or spacer, which is designed to be multi-functional. The connector bracket allows for an external device, object or assembly maybe fixed to the trailer. The bracket can be mounted in a variety of orientations, or angles.

The ability to off-set and rotate the wheel station suspension system means that an awkwardly-shaped superstructures or loads are able to be fitted to the trailer chassis and still allow for evenly uninterrupted weight distribution.

The trailer may be used without a suspension module with the wheels simply attaching to the trailer.

## Claims

1. A modular trailer (10) comprising:
a tubular central chassis spine (12) constructed from at least one cross-shaped tubular section (14), wherein two of the limbs of the cross-shaped tubular section (14) extend axially and the other two limbs extend transversely, each of the limbs being provided with connection sections at their ends;
a plurality of tubular sections (16) connected to the connection sections of the transversely extending limbs of the at least one cross-shaped tubular structure (14), wherein at least two of the tubular sections (16) are provided with wheels (38);
a tubular T-shaped end section (20) connected to the connection section of one of the axially extending limbs of the central chassis spine (12); and
a towing connection (22) connected to the connection section at the opposite end of the central chassis spine (12) from that of the end T-shaped tubular end section (20),
wherein the tubular sections (16) are readily removable from the connection sections of the central chassis spine (12); and
**characterised in that** the length of the modular trailer spine (12) is extendible by attaching further cross-shaped tubular sections (16) to the connection sections of the axial limbs of the tubular central chassis spine (12).

2. A modular trailer (10) according to claim 1, wherein the connection section of each element of the trailer comprises a flange with apertures therein and the elements of the trailer are connected by way of retaining bolts with locking nuts passing through the apertures of the respective flanges.

3. A modular trailer (10) according to claim 2, wherein a spacer (40) with a flange is arranged between the connection section and each clement connected thereto.

4. A modular trailer (10) according to any preceding claim, wherein the wheels (38) are provided with hydraulic brakes.

5. A modular trailer (10) according to any preceding claim, wherein the wheels (38) are provided with suspension (36).

6. A modular trailer (10) according to any preceding claim, wherein the width of the modular trailer is extendable by attaching further tubular sections (16) to the tubular sections connected to the tubular central chassis spine (12).

7. A kit comprising:
a plurality of cross-shaped tubular sections (14);
a plurality of tubular sections (16);
a tubular T-shaped end section (20);
a towing connection (22); and
a plurality of wheels (38);
wherein each of the cross-shaped tubular sections (14), tubular sections (16), T-shaped end section (20) and towing connection (22) is provided with at least one connection section.

8. A kit according to claim 7, wherein the connection sections (16) comprise a flange with apertures therein.

9. A kit according to claim 7 or claim 8, wherein the kit further comprises a plurality of spacer sections (40).

10. A method of using a trailer, the method comprising the steps of:
assembling a kit according to any one of claims 7 to 9; and
affixing the trailer to a vehicle.

## Patentansprüche

1. Modularer Anhänger (10), umfassend:
ein rohrförmiges mittleres Fahrgestellgerüst (12), das aus mindestens einem kreuzförmigen rohrförmigen Abschnitt (14) aufgebaut ist, wobei zwei der Schenkel des kreuzförmigen rohrförmigen Abschnitts (14) sich axial erstrecken und die anderen zwei Schenkel sich quer erstrecken, wobei jeder der Schenkel an seinen Enden mit Verbindungsabschnitten versehen ist;
eine Vielzahl von rohrförmigen Abschnitten (16), die mit den Verbindungsabschnitten der sich quer erstreckenden Schenkel der mindestens einen kreuzförmigen rohrförmigen Struktur (14) verbunden sind, wobei mindestens zwei der rohrförmigen Abschnitte (16) mit Rädern (38) versehen sind;
einen rohrförmigen T-förmigen Endabschnitt (20), der mit dem Verbindungsabschnitt von einem der sich axial erstreckenden Schenkel des mittleren Fahrgestellgerüsts (12) verbunden ist; und
eine Zugverbindung (22), die mit dem Verbindungsabschnitt an dem gegenüberliegenden Ende des mittleren Fahrgestellgerüsts (12) von dem des T-förmigen rohrförmigen Endabschnitts (20) verbunden ist,
wobei die rohrförmigen Abschnitte (16) leicht von den Verbindungsabschnitten des mittleren Fahrgestellgerüsts (12) abnehmbar sind; und
**dadurch gekennzeichnet, dass** die Länge des modularen Anhängergerüsts (12) durch Anbringen weiterer kreuzförmiger rohrförmiger Abschnitte (16) an den Verbindungsabschnitten der axialen Schenkel des rohrförmigen zentralen Fahrgestellgerüsts (12) erweiterbar ist.

2. Modularer Anhänger (10) nach Anspruch 1, wobei der Verbindungsabschnitt von jedem Element des Anhängers einen Flansch mit Öffnungen darin umfasst und die Elemente des Anhängers mittels Halteschrauben mit Sicherungsmuttern verbunden sind, die durch die Öffnungen der jeweiligen Flansche verlaufen.

3. Modularer Anhänger (10) nach Anspruch 2, wobei zwischen dem Verbindungsabschnitt und jedem daran verbundenen Element ein Abstandshalter (40) mit einem Flansch angeordnet ist.

4. Modularer Anhänger (10) nach einem der vorherigen Ansprüche, wobei die Räder (38) mit hydraulischen Bremsen versehen sind.

5. Modularer Anhänger (10) nach einem der vorherigen Ansprüche, wobei die Räder (38) mit einer Federung (36) versehen sind.

6. Modularer Anhänger (10) nach einem der vorherigen Ansprüche, wobei die Breite des modularen Anhängers durch Anbringen weiterer rohrförmiger Abschnitte (16) an den rohrförmigen Abschnitten, die mit dem rohrförmigen zentralen Fahrgestellgerüst (12) verbunden sind, erweiterbar ist.

7. Kit, umfassend:
eine Vielzahl von kreuzförmigen rohrförmigen Abschnitten (14);
eine Vielzahl von rohrförmigen Abschnitten (16);
einen rohrförmigen T-förmigen Endabschnitt (20);
eine Zugverbindung (22); und
eine Vielzahl von Rädern (38);
wobei jeder von den kreuzförmigen Rohrabschnitten (14), den rohrförmigen Abschnitten (16), dem T-förmigen Endabschnitt (20) und der Zugverbindung (22) mit mindestens einem Verbindungsabschnitt versehen ist.

8. Kit nach Anspruch 7, wobei die Verbindungsabschnitte (16) einen Flansch mit Öffnungen darin umfassen.

9. Kit nach Anspruch 7 oder Anspruch 8, wobei das Kit ferner eine Vielzahl von Abstandshalterabschnitten (40) umfasst.

10. Verfahren zur Verwendung eines Anhängers, das Verfahren umfassend die folgenden Schritte:
Zusammenbauen eines Kits nach einem der Ansprüche 7 bis 9; und
Befestigen des Anhängers an einem Fahrzeug.

## Revendications

1. Remorque modulaire (10) comprenant :
une colonne vertébrale de châssis centrale tubulaire (12) construite à partir d'au moins une section tubulaire en forme de croix (14), dans laquelle deux des branches de la section tubulaire en forme de croix (14) s'étendent axialement et les deux autres branches s'étendent transversalement, chacune des branches étant pourvues de sections de raccordement au niveau de leurs extrémités ;
une pluralité de sections tubulaires (16) raccordées aux sections de raccordement des branches s'étendant transversalement de l'au moins une structure tubulaire en forme de croix (14), dans laquelle au moins deux des sections tubulaires (16) sont pourvues de roues (38) ;
une section d'extrémité tubulaire en forme de T (20) raccordée à la section de raccordement de l'une des branches s'étendant axialement de la colonne vertébrale de châssis centrale (12) ; et
un raccordement de remorquage (22) raccordé à la section de raccordement au niveau de l'extrémité de la colonne vertébrale de châssis centrale (12) opposée à celle de la section d'extrémité tubulaire en forme de T extrémité (20),
dans laquelle les sections tubulaires (16) peuvent être facilement retirées des sections de raccordement de la colonne vertébrale de châssis centrale (12) ; et
**caractérisée en ce que** la longueur de la colonne vertébrale de remorque modulaire (12) est extensible en fixant d'autres sections tubulaires en forme de croix (16) au niveau des sections de raccordement des branches axiales de la colonne vertébrale de châssis centrale tubulaire (12).

2. Remorque modulaire (10) selon la revendication 1, dans laquelle la section de raccordement de chaque élément de la remorque comprend une bride avec des ouvertures à l'intérieur de celle-ci et les éléments de la remorque sont raccordés au moyen de boulons de retenue avec des écrous de blocage passant à travers les ouvertures des brides respectives.

3. Remorque modulaire (10) selon la revendication 2, dans laquelle une entretoise (40) avec une bride est disposée entre la section de raccordement et chaque élément raccordé à celle-ci.

4. Remorque modulaire (10) selon l'une quelconque des revendications précédentes, dans laquelle les roues (38) sont pourvues de freins hydrauliques.

5. Remorque modulaire (10) selon l'une quelconque des revendications précédentes, dans laquelle les roues (38) sont pourvues de suspension (36).

6. Remorque modulaire (10) selon l'une quelconque des revendications précédentes, dans laquelle la largeur de la remorque modulaire est extensible en attachant d'autres sections tubulaires (16) aux sections tubulaires raccordées à la colonne vertébrale de châssis centrale tubulaire (12).

7. Kit comprenant :
une pluralité de sections tubulaires en forme de croix (14) ;
une pluralité de sections tubulaires (16) ;
une section d'extrémité tubulaire en forme de T (20) ;
un raccordement de remorquage (22) ; et
une pluralité de roues (38) ;
dans lequel chaque élément parmi les sections tubulaires en forme de croix (14), les sections tubulaires (16), la section d'extrémité en forme de T (20) et le raccordement de remorquage (22) est pourvu d'au moins une section de raccordement.

8. Kit selon la revendication 7, dans lequel les sections de raccordement (16) comprennent une bride avec des ouvertures à l'intérieur de celle-ci.

9. Kit selon la revendication 7 ou la revendication 8, dans lequel le kit comprend en outre une pluralité de sections d'entretoise (40).

10. Procédé d'utilisation d'une remorque, le procédé comprenant les étapes de :
assemblage d'un kit selon l'une quelconque des revendications 7 à 9 ; et
attache de la remorque à un véhicule.
